Europäisches Patentamt

European Patent Office

Office européen des brevets

(19)

(11) Veröffentlichungsnummer: **0 111 309**
**B1**

(12) **EUROPÄISCHE PATENTSCHRIFT**

(45) Veröffentlichungstag der Patentschrift:
03.05.89

(51) Int. Cl.⁴: **H 04 L 25/49**

(21) Anmeldenummer: **83112317.9**

(22) Anmeldetag: **07.12.83**

(54) **CMI-Decoder.**

(30) Priorität: **10.12.82 DE 3245845**

(43) Veröffentlichungstag der Anmeldung:
**20.06.84 Patentblatt 84/25**

(45) Bekanntmachung des Hinweises auf die Patenterteilung:
**03.05.89 Patentblatt 89/18**

(84) Benannte Vertragsstaaten:
**AT BE CH DE FR GB IT LI NL SE**

(56) Entgegenhaltungen:
**FR-A- 2 495 408**
**US-A- 3 953 673**

**PATENTS ABSTRACTS OF JAPAN, Band 6, Nr. 115
(E-115)[993], 26. Juni 1982; & JP-A-57 45 763 (FUJITSU
K.K.) 15-03-1982**

(73) Patentinhaber: **Siemens Aktiengesellschaft Berlin und
München, Wittelsbacherplatz 2, D-8000 München 2 (DE)**

(72) Erfinder: **Härle, Hans Georg, Dipl.-Ing., Haldenweg 4,
D-8901 Leitershofen (DE)**

ACTORUM AG

## Beschreibung

Die Erfindung betrifft einen CMI-Decoder zur Umformung von CMI-codierten Signalen in binäre Signale mit eingangsseitig angeschlossenen Differenzverstärkern.

Aus der DE-A 3 033 351 ist ein Codierer zur Erzeugung von Signalen im CMI-Code bekannt. Bei diesem Code handelt es sich um einen zweistufigen NRZ-Code, bei dem ein Null-Zeichen durch die Kombination eines halbbitbreiten negativen Impulses gefolgt von einem halbbitbreiten positiven Impuls dargestellt wird, während 1-Zeichen abwechselnd als vollbitbreite $+1$ oder $-1$ Zeichen erscheinen. Dieser CMI-Code ist im hierarchischen Aufbau der digitalen Signalübertragung vom CCITT in der Empfehlung G. 703 für die 140 Mbit/s-Schnittstellen vorgesehen.

Ein CMI-Decoder ist aus dem Servicehandbuch des Meßgerätes «Error-Detector» HP 3763 A Figur A4-3 Teil 2 der Firma Hewlett Packard bekannt. Der bekannte CMI-Decoder weist zwei eingangsseitig angeordnete Differenzverstärker auf, wobei der Ausgang des einen Differenzverstärkers direkt und der Ausgang des anderen über umschaltbare Laufzeitglieder mit einem Gatternetzwerk verbunden sind. Durch die Verwendung von fünf OR/NOR Gliedern ist der bekannte CMI-Decoder aufwendig aufgebaut, bei der Verwendung in ferngespeisten Anordnungen kann außerdem die hohe Leistungsaufnahme eine Rolle spielen.

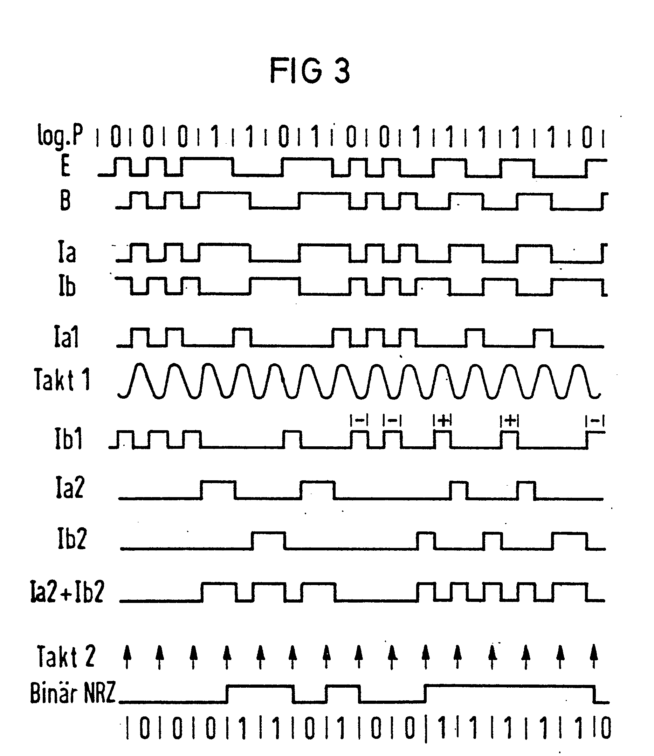

Zur zeitmäßigen Regenerierung der erzeugten Signale ist es notwendig, aus dem empfangenen CMI-Signal ein Taktsignal zu gewinnen. Dies ist bekanntlich nicht ohne weiteres möglich, da wie aus den Zeilen E und B aus Fig. 3 ersichtlich ist, bei CMI-Signalen Impulslängen zwischen dem 0,5fachen und dem 1,5fachen der Bitdauer auftreten können. Die Gewinnung eines Signals mit phasenrichtiger Taktfrequenz durch einfaches Aussieben aus CMI-codierten Signalen ist also nicht möglich, im genannten Stand der Technik wird deshalb zur Taktgewinnung im Anschluß an den CMI-Decoder eine aufwendige Schaltung mit fünf weiteren Gatterbausteinen und weiteren Bauelementen benötigt.

Bei der vorliegenden Erfindung besteht die Aufgabe darin, einen wenig aufwendigen CMI-Decoder zu entwickeln, der bei Bitraten von 140 Mbit/s einsetzbar ist, nur eine geringe Leistung aufnimmt und die einfache Gewinnung eines phasenrichtigen Taktsignales gestattet.

Erfindungsgemäß wird die Aufgabe dadurch gelöst, daß ein erster, ein zweiter und ein dritter Differenzverstärker vorgesehen sind, daß der Eingang der ersten Stufe des ersten Differenzverstärkers mit dem Eingang der zweiten Stufe des zweiten Differenzverstärkers und mit einer ersten Referenzspannungsquelle verbunden ist, daß die Eingänge der zweiten Stufe des ersten Differenzverstärkers und der ersten Stufe des zweiten Differenzverstärkers miteinander und mit einem Eingangsanschluß verbunden sind, daß der erste Differenzverstärker mit der ersten Stufe des dritten Differenzverstärkers eine erste Kaskadenschaltung und der zweite Differenzverstärker mit der zweiten Stufe des dritten Differenzverstärkers eine zweite Kaskadenschaltung bildet, daß der Eingang der zweiten Stufe des dritten Differenzverstärkers mit einer zweiten Referenzspannungsquelle verbunden ist, die sich gegenüber der ersten Referenzspannungsquelle auf negativem Potential befindet, daß der Eingang der ersten Stufe des dritten Differenzverstärkers über ein Laufzeitglied mit einer Verzögerung entsprechend einer halben Bitdauer an den Eingang für die CMI-codierten Signale angeschlossen ist und daß die Ausgänge der einzelnen Stufen des ersten und des zweiten Differenzverstärkers die Ausgänge für binäre Teilsignale darstellen, die durch Zusammenfassung von je zwei Teilsignalen das gewünschte binäre RZ-Signal ergeben.

Vorteilhaft bei dem erfindungsgemäßen CMI-Decoder ist die Realisierung ohne aufwendige Abgleicharbeiten, da lediglich das Laufzeitglied auf eine Verzögerung von etwa der halben Bitdauer einzustellen ist.

Zweckmäßige Weiterbildungen des erfindungsgemäßen Decoders sind in den Patentansprüchen 2 bis 8 beschrieben.

Die Erfindung soll im folgenden anhand der Zeichnung näher erläutert werden.

In der Zeichnung zeigt

Fig. 1 die Prinzipschaltung eines Decoders nach der Erfindung,

Fig. 2 die Prinzipschaltung eines erfindungsgemäßen Decoders zur Erzeugung zeitmäßig regenerierter binärer Signale,

Fig. 3 ein erstes Impulsdiagramm zum Decoder nach Fig. 1,

Fig. 4 ein zweites Impulsdiagramm zum Decoder nach Fig. 1,

Fig. 5 ein detailliertes Schaltbild für ein Ausführungsbeispiel des erfindungsgemäßen Decoders.

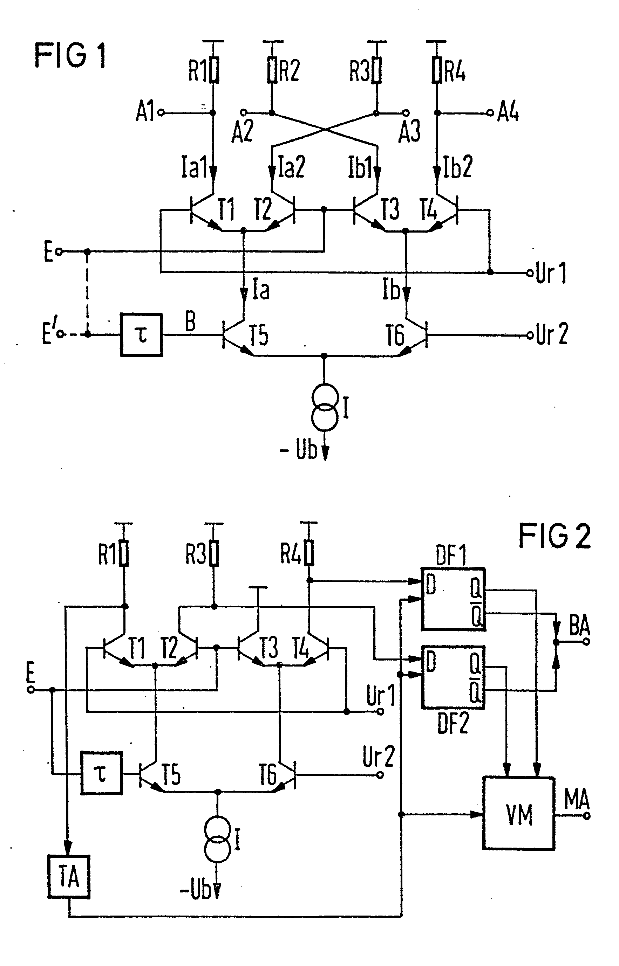

Der in der Figur 1 dargestellte CMI-Decoder enthält eine Differenzverstärkeranordnung mit zwei Eingängen, wobei dem einen Eingang ein Laufzeitglied $\tau$ vorgeschaltet ist. Die Differenzverstärkeranordnung enthält einen ersten, einen zweiten und einen dritten emittergekoppelten Differenzverstärker mit jeweils zwei Stufen, wobei in jeder Stufe ein n pn-Transistor enthalten ist. In der ersten Stufe des ersten Differenzverstärkers ist der erste Transistor T1 enthalten, dessen Kollektor mit dem ersten Ausgang A1 und über einen ersten Widerstand R1 mit Bezugspotential verbunden ist und der vom Strom Ia1 durchflossen wird. In der zweiten Stufe des ersten Differenzverstärkers ist ein zweiter Transistor T2 enthalten, dessen Kollektor mit dem dritten Ausgang A3 und über einen dritten Widerstand R3 mit Bezugspotential verbunden ist und der vom Strom Ia2 durchflossen wird. In der ersten Stufe des zweiten Differenzverstärkers ist ein dritter Transistor T3 enthalten, dessen Kollektor mit dem zweiten Ausgang A2 und über einen zweiten Widerstand R2 mit Bezugspotential verbunden ist und der vom Strom Ib1 durchflossen wird. In der zweiten Stufe des zweiten Differenzverstärkers ist ein vierter Transistor T4 enthalten, dessen Kollektor mit dem vierten Ausgang A4 und über einen vierten Widerstand R4 mit Bezugspotential verbunden ist und der vom Strom Ib2 durchflossen wird.

Die Basisanschlüsse des zweiten und des dritten Transistors T2, T3 sind miteinander und mit dem Eingang E für die CMI-codierten Signale verbunden. Die Basisanschlüsse des ersten und des vierten Transistors T1, T4 sind miteinander und mit einer ersten Referenzspannungsquelle Ur1 verbunden. Die Emitteranschlüsse des ersten und des zweiten Transistors sind miteinander und mit dem Kollektoranschluß eines fünften Transistors T5 verbunden, der in der ersten Stufe eines dritten Differenzverstärkers enthalten ist. Die Emitteranschlüsse des dritten und des vierten Transistors sind ebenfalls miteinander verbunden und außerdem mit dem Kollektoranschluß eines sechsten Transistors T6, der in der zweiten Stufe des dritten Differenzverstärkers enthalten ist. Die Emitteranschlüsse des fünften und des sechsten Transistors T5, T6 sind miteinander und über eine Stromquelle für den Strom I mit einem Anschluß für die Betriebsspannung −Ub verbunden. Der erste Differenzverstärker bildet mit der vom Strom Ia durchflossenen ersten Stufe des dritten Differenzverstärkers eine erste Kaskadenschaltung, während der zweite Differenzverstärker mit der vom Strom Ib durchflossenen zweiten Stufe des dritten Differenzverstärkers eine zweite Kaskadenschaltung bildet. Der Basisanschluß des sechsten Transistors T6 ist mit einer zweiten Referenzspannungsquelle Ur2 verbunden, während der Basisanschluß des fünften Transistors T5 an Punkt B mit dem Ausgang eines Laufzeitgliedes τ verbunden ist, das eine Verzögerung entsprechend einer halben Bitdauer für die durchfließenden Signale bewirkt. Der Eingangsanschluß des Laufzeitgliedes τ kann im ersten Fall mit dem Eingang E für die CMI-codierten Signale und im zweiten Fall mit dem Eingangsanschluß E' für die inversen CMI-codierten Signale verbunden sein. Im ersten Fall treten an dem dritten und dem vierten Ausgang A3, A4 die erzeugten binären Teilsignale auf, die nach Zusammenfassung das gewünschte binäre RZ-Signal ergeben.

In der Fig. 3 ist für diesen Fall das Impulsdiagramm dargestellt. In der obersten Zeile log. P. ist der logische Pegel für die Eingangssignale angegeben, die in der Zeile E dargestellt sind. Es ist erkennbar, daß es sich in der Zeile E um CMIcodierte Signale handelt, da die Null-Zeichen durch einen Doppelimpuls dargestellt sind, während die Eins-Zeichen alternierend durch vollbitbreite Impulse wiedergegeben werden.

In der Zeile B ist das Signal am Ausgang des Laufzeitgliedes dargestellt, das gegenüber dem Signal in Zeile E um ein halbes Bit verzögert ist. In den Zeilen Ia und Ib sind die Ströme durch die erste bzw. zweite Stufe des dritten Differenzverstärkers dargestellt, diese Ströme sind in bekannter Weise zueinander invers.

Der aus Ia erzeugte Strom Ia1 der ersten Stufe des ersten Differenzverstärkers enthält nur noch halbbitbreite Impulse, sodaß aus diesem Strom bzw. aus der am Widerstand R1 erzeugten Spannung mittels eines Schwingkreises ein phasenrichtiges Taktsignal ausgesiebt werden kann.

In der Zeile Ib1 ist der Strom durch die erste Stufe des zweiten Differenzverstärkers dargestellt, der im vorliegenden Fall aber nicht ausgenutzt wird. In den Strömen Ia2 und Ib2 der zweiten Stufe des ersten und des zweiten Differenzverstärkers treten als Impulse die ursprünglichen im CMI-codierten Signal enthaltenen Eins-Impulse auf, dabei sind die ursprünglichen positiven Eins-Impulse im Strom Ia2 und die ursprünglichen negativen Eins-Impulse im Strom Ib2 enthalten. Durch Verbindung der beiden zugehörigen Ausgangsanschlüsse A3 und A4 mit den binären Teilsignalen ergibt sich ein binäres RZ-Signal, in dem die Eins-Impulse beider Stufen enthalten sind. Wird dieses Signal beispielsweise in einem nachgeschalteten D-Flipflop mit einem durch zeitliche Verschiebung des ersten Taktes (Takt 1) gewonnenen zweiten Takt (Takt 2) in der Mitte der halbbitbreiten Impulse abgefragt, dann ergibt sich das in der letzten Zeile dargestellte binäre NRZ-Signal, das amplituden- und zeitmäßig regeneriert ist.

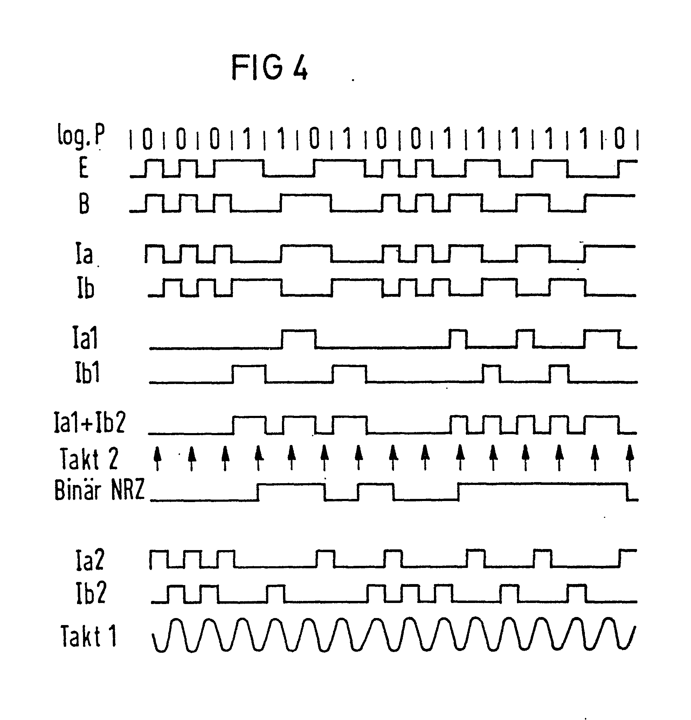

In einem zweiten Fall ist der Eingang des Verzögerungsgliedes τ mit einem Eingang E' für die inversen CMI-codierten Signale verbunden. Dieser Fall soll anhand des Phasendiagramms nach der Fig. 4 erläutert werden. In der Fig. 4 ist das Eingangssignal E mit seinem logischen Pegel log. P. dargestellt und das am Punkte B auftretende Signal. Die Ströme Ia und Ib der beiden Stufen des dritten Differenzverstärkers sind wiederum invers zueinander, im Strom Ia1 der ersten Stufe des ersten Differenzverstärkers ist, wie erkennbar, in diesem Falle die Taktinformation nicht enthalten. Die Taktinformation ist in diesem Falle in den Strömen Ia2 und Ib2 der zweiten Stufe des ersten und des zweiten Differenzverstärkers enthalten, wobei die Taktinformation in der zweiten Stufe des zweiten Differenzverstärkers phasenrichtig auftritt. Die Ströme Ia1 und Ib1 geben die ursprünglich im CMI-codierten Eingangssignal enthaltenen Eins-Impulse wieder, nach Kombination beider Ströme ergibt sich das binäre RZ-Signal, das mit einem zeitlich verschobenen ersten Taktsignal entsprechend dem zweiten Takt abgetastet ein binäres NRZ-Signal ergibt.

Entsprechend dem erläuterten ersten Fall der Verbindung des Laufzeitgliedes τ mit dem Eingang E in der Fig. 1 und der dazugehörigen Fig. 3 ist der in Fig. 2 dargestellte Decoder geschaltet. Da das Ausgangssignal am Anschluß A2 nicht interessiert, wurde der Kollektoranschluß des dritten Kollektors T3 direkt mit Bezugspotential verbunden. Die am ersten Widerstand R1 anstehende Taktinformation wird einer Anordnung TA zur Taktableitung zugeführt, die einen Trennverstärker mit einem auf die Taktfrequenz abgestimmten Schwingkreis, einen Phasenschieber und einen Verstärker enthält. Mit den Kollektoranschlüssen des zweiten und des vierten Transistors T2 und T4 sind D-Eingänge eines ersten und eines zweiten D-Flipflops DF1, DF2, verbunden, deren Takteingänge an den Ausgang der Anordnung TA zur Taktableitung angeschlossen sind. Durch diese D-Flipflops wird mit dem Abfragetakt (Takt 2) eine zeitmäßige Regenerierung des binären RZ-Signals vorgenommen und dadurch das binäre NRZ-Signal erzeugt. Die invertierenden Ausgänge Q̄ der beiden D-Flipflops sind miteinander und mit einem Ausgang BA für das binäre Ausgangssignal verbunden.

Zusätzlich ist der Decoder nach der Fig. 2 durch einen Coderegelverletzungsprüfer VM ergänzt. Wie bereits ausgeführt, sind in den Strömen Ia2 und Ib2 die ursprünglich im CMI-codierten Signal enthaltenen Eins-Impulse getrennt nach ihren ursprünglichen Polaritäten enthalten. Da im CMI-Code auf einen positiven Eins-Impuls immer ein negativer Eins-Impuls folgen muß, muß entsprechend auf einen Impuls im Strom Ia2 ein Impuls im Strom Ib2 und daraufhin wieder ein Impuls im Strom Ia2 auftreten.

Nach der getrennten zeitmäßigen Regenerierung der Impulse entsprechend den ursprünglichen positiven bzw. negativen Eins-Impulsen in den beiden D-Flipflops stehen an den Ausgängen dieser D-Flipflops die entsprechenden Impulse zur Überwachung der Coderegel zur Verfügung. Die Q-Ausgänge der beiden D-Flipflops sind deshalb mit Signaleingängen des Coderegelverletzungsprüfers VM verbunden, der entsprechend bekannten Coderegelverletzungsprüfern für den AMI-Code den Wechsel der Impulse in den Strömen Ia2 bzw. Ib2 überwacht und bei einer Coderegelverletzung ein entsprechendes Ausgangssignal an den Ausgang MA zur weiteren Überwachung bzw. Alarmierung abgibt.

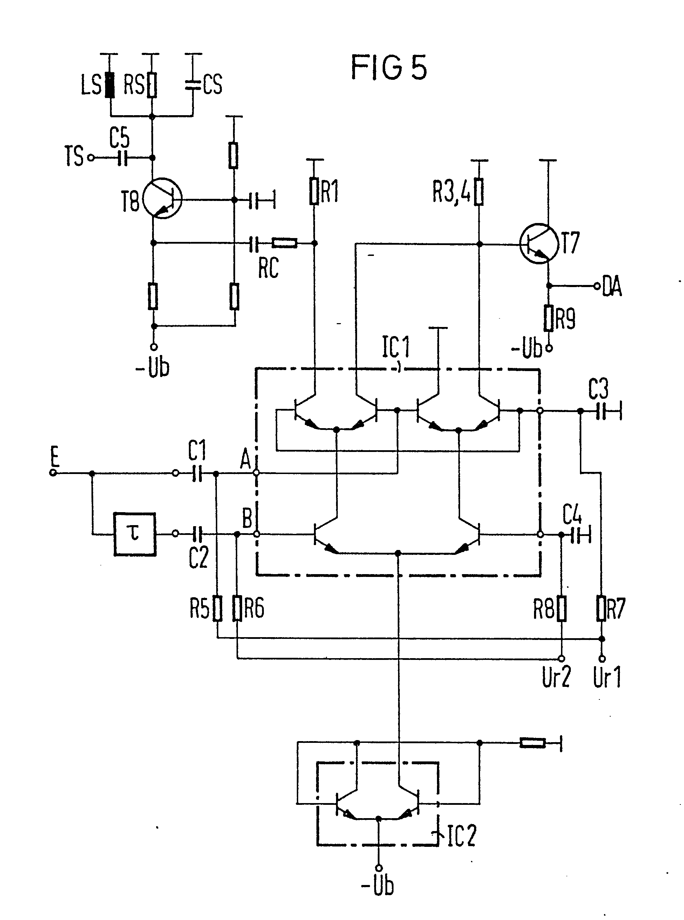

In der Fig. 5 ist ein detailliertes Ausführungsbeispiel für den Decoder nach der Fig. 1 mit Ergänzungen dargestellt, das den Fall wiedergibt, daß der Eingang des Laufzeitgliedes τ mit dem Eingang E für die CMI-codierten Signale verbunden ist. Die Transistoren T1 bis T6 sind Teil einer ersten integrierten Schaltung, IC1 deren Eingänge A bzw. B über einen ersten bzw. zweiten Koppelkondensator C1, C2 mit dem Eingang E bzw. dem Ausgang des Laufzeitgliedes τ verbunden sind. Mit dem Eingang A sind dabei die Eingänge der zweiten Stufe des ersten Differenzverstärkers und der ersten Stufe des zweiten Differenzverstärkers verbunden, während mit dem Eingang B der Eingang der ersten Stufe des dritten Differenzverstärkers verbunden ist. Die Eingänge der zweiten Stufe des ersten Differenzverstärkers und der ersten Stufe des zweiten Differenzverstärkers sind gleichstrommäßig über den fünften Widerstand R5 und die Eingänge der ersten Stufe des ersten Differenzverstärkers sind über den siebenten Widerstand R7 an die erste Referenzspannungsquelle Ur1 angeschlossen, so daß ohne Signal alle Stufen die gleiche Vorspannung enthalten. Der zwischen Bezugspotential und dem Eingang der zweiten Stufe des zweiten Differenzverstärkers eingeschaltete Kondensator C3 dient dem wechselstrommäßigen Kurzschluß des Widerstandes R7. Die erste Stufe des dritten Differenzverstärkers ist gleichstrommäßig über dem Widerstand R6 und die zweite Stufe des dritten Differenzverstärkers ist über dem Widerstand R8 an die zweite Referenzspannungsquelle Ur2 angeschlossen, außerdem ist ein Abblockkondensator C2 zwischen Eingang der zweiten Stufe des dritten Differenzverstärkers und Bezugspotential vorgesehen. Damit sind ohne Signal auch die Eingänge der beiden Stufen des dritten Differenzverstärkers auf gleichem Potential. Im Hinblick auf die Kaskadenschaltung der drei Differenzverstärker ist das Potential der zweiten Referenzspannungsquelle Ur2 negativer als das Potential der ersten Referenzspannungsquelle Ur1.

Als Stromquelle für die in der integrierten Schaltung IC1 enthaltene Differenzverstärkeranordnung dient eine zweite integrierte Schaltung IC2, die in bekannter Weise als Stromspiegel geschaltet ist und mit der Betriebsspannungsquelle −Ub verbunden ist. Der Ausgangsanschluß der zweiten Stufe des ersten Differenzverstärkers und der zweiten Stufe des zweiten Differenzverstärkers sind miteinander und über einen Widerstand R3, 4 mit Bezugspotential verbunden, außerdem sind die Kollektoranschlüsse mit dem Basisanschluß eines siebten Transistors T7 verbunden, dessen Kollektoranschluß am Bezugspotential und dessen Emitteranschluß mit einem Ausgangsanschluß DA und über einen Widerstand R9 mit der Betriebsspannung −Ub verbunden ist. Der Transistor T7 ist als Emitterfolger geschaltet. Er dient zur potentialmäßigen Anpassung an ein − hier nicht dargestelltes − nachfolgendes D-Flipflop zur zeitmäßigen Regenerierung der binären Teilsignale oder des binären RZ-Signals. Der Ausgang A1 der ersten Stufe des ersten Differenzverstärkers ist über den ersten Widerstand R1 mit Bezugspotential und außerdem über ein RC-Glied RC mit einem in Basisschaltung betriebenen achten Transistor T8 verbunden. Der Kollektoranschluß dieses Transistors ist über einen Koppelkondensator C5 mit einem Anschluß TS für ein Taktsignal und außerdem über einen durch einen Parallelwiderstand RS gedämpften Parallelschwingkreis mit Bezugspotential verbunden. Der Parallelschwingkreis aus der Kapazität CS und der Induktivität LS ist auf die Taktfrequenz der CMI-codierten bzw. der binären Signale abgestimmt. Die Verstärkerstufe mit dem Transistor T8 ist in der Anordnung TA zur Taktableitung nach der Fig. 2 enthalten.

**Patentansprüche**

1. CMI-Decoder zur Umformung von CMI-codierten Signalen in binäre Signale mit eingangsseitig angeschlossenen Differenzverstärkern, dadurch gekennzeichnet, daß ein erster, ein zweiter und ein dritter Differenzverstärker (T1, T2; T3, T4; T5, T6) vorgesehen sind, daß der Eingang der ersten Stufe (T1) des ersten Differenzverstärkers mit dem Eingang der zweiten Stufe (T4) des zweiten Differenzverstärkers und mit einer ersten Referenzspannungsquelle (Ur1) verbunden ist, daß die Eingänge der zweiten Stufe (T2) des ersten Differenzverstärkers und der ersten Stufe (T3) des zweiten Differenzverstärkers miteinander und mit einem Eingangsanschluß (E) verbunden sind, daß der erste Differenzverstärker mit der ersten Stufe (T5) des dritten Differenzverstärkers eine erste Kaskadenschaltung und der zweite Differenzverstärker mit der zweiten Stufe (T6) des dritten Differenzverstärkers eine zweite Kaskadenschaltung bildet, daß der Eingang der zweiten Stufe des dritten Differenzverstärkers mit einer zweiten Referenzspannungsquelle (Ur2) verbunden ist, die sich gegenüber der ersten Referenzspannungsquelle auf negativem Potential befindet, daß der Eingang der ersten Stufe des dritten Differenzverstärkers über ein Laufzeitglied ($\tau$) mit einer Verzögerung entsprechend einer halben Bitdauer an den Eingang (E) für die CMI-codierten Signale angeschlossen ist und daß die Ausgänge (A1 ... A4) der einzelnen Stufen des ersten und des zweiten Differenzverstärkers die Ausgänge für binäre Teilsignale darstellen, die durch Zusammenfassung von je zwei Teilsignalen das gewünschte binäre RZ-Signal ergeben.

2. CMI-Decoder nach Anspruch 1, dadurch gekennzeichnet, daß die erste Stufe des ersten Differenzverstärkers einen ersten Transistor (T1) enthält, dessen Kollektoranschluß mit einem ersten Ausgangsanschluß (A1) und über einen ersten Widerstand (R1) mit Bezugspotential verbunden ist, daß die zweite Stufe des ersten Differenzverstärkers einen zweiten Transistor (T2) enthält, dessen Kollektoranschluß mit einem Anschluß für einen dritten Ausgang (A3) und über einen dritten Widerstand (R3) mit Bezugspotential verbunden ist, daß die erste Stufe des zweiten Differenzverstärkers einen dritten Transistor (T3) enthält, dessen Kollektoranschluß mit einem zweiten Ausgangsanschluß (A2) und über einen zweiten Widerstand (R2) mit Bezugspotential verbunden ist, daß die zweite Stufe des zweiten Differenzverstärkers einen vierten Transistor (T4) enthält, dessen Kollektoranschluß mit einem vierten Ausgangsanschluß (A4) und über einen vierten Widerstand (R4) mit Bezugspotential verbunden ist, daß die erste Stufe des dritten Differenzverstärkers einen fünften Transistor (T5) enthält, dessen Kollektoranschluß mit den zusammengeführten Emitteranschlüssen des ersten und des zweiten Transistors (T1, T2) verbunden ist, daß die zweite Stufe des dritten Differenzverstärkers einen sechsten Transistor (T6) enthält, dessen Kollektoranschluß mit den zusammengeführten Emitteranschlüssen des dritten und des vierten Transistors (T3, T4) verbunden ist, daß die Basisanschlüsse des ersten und des vierten Transistors (T1, T4) miteinander und mit der ersten Referenzspannungsquelle (Ur1) verbunden sind, daß die Basisanschlüsse des zweiten und des dritten Transistors (T2, T3) mit dem Signaleingang (E) verbunden sind und daß der Basisanschluß des sechsten Transistors (T6) mit der zweiten Referenzspannungsquelle verbunden ist.

3. CMI-Decoder nach Anspruch 1 oder 2, dadurch gekennzeichnet, daß bei einem Anschluß des Laufzeitgliedes ($\tau$) an den Eingang (E) für die CMI-codierten Signale zur Erzeugung eines binären Signales der dritte Ausgang (A3) und der vierte Ausgang (A4) miteinander verbunden sind und einen gemeinsamen Ausgang darstellen und der erste Ausgang (A1) für den Anschluß einer Einrichtung zur Taktableitung (TA) vorgesehen ist.

4. CMI-Decoder nach Anspruch 1 oder 2, dadurch gekennzeichnet, daß bei einem Anschluß des Laufzeitgliedes ($\tau$) an einen Eingang (E') für ein inverses CMI-codiertes Signal zur Erzeugung eines binären Signals der erste und der zweite Ausgang (A1, A2) miteinander verbunden sind und den gemeinsamen Ausgang für das gewünschte binäre RZ-Signal darstellen und daß der Anschluß einer Anordnung (TA) zur Taktableitung an den vierten Ausgang (A4) vorgesehen ist.

5. CMI-Decoder nach Anspruch 4 oder 4, dadurch gekennzeichnet, daß die Anordnung (TA) zur Taktableitung einen auf die Taktfrequenz der binären Signale abgestimmten Schwingkreis enthält.

6. CMI-Decoder nach den Ansprüchen 1 bis 5, dadurch gekennzeichnet, daß mit dem Ausgängen für die binären Signale jeweils getrennt der D-Eingang eines ersten und eines zweiten D-Flipflops (DF1, DF2) verbunden sind, deren Takteingänge miteinander und mit dem Ausgang der Anordnung (TA) zur Taktableitung verbunden sind, und daß die invertierenden Ausgänge ($\overline{Q}$) der beiden D-Flipflops miteinander und mit einem Ausgang (BA) für zeitmäßig regenerierte binäre Signale verbunden sind.

7. CMI-Decoder nach Anspruch 6, dadurch gekennzeichnet, daß mit den nichtinvertierenden Ausgängen (Q) der beiden D-Flipflops (DF1, DF2) zwei Signaleingänge eines Coderegelverletzungsprüfers (VM) verbunden sind, dessen Takteingang mit dem Ausgang der Anordnung (T) zur Taktableitung und dessen Ausgang (MA) mit einer Überwachungseinrichtung verbunden ist.

8. CMI-Decoder nach Anspruch 6, dadurch gekennzeichnet, daß zur Erzeugung amplituden- und zeitmäßig regenerierter CMI-Signale an den Ausgang (BA) für die zeitmäßig regenerierten binären Signale ein CMI-Decodierer angeschlossen ist.

**Claims**

1. CMI decoder for the conversion of CMI-coded signals into binary signals with differential amplifiers connected on the input side, characterized in that a first, a second and a third differential amplifier (T1, T2; T3, T4; T5, T6) are provided, in that the input of the first stage (T1) of the first differential amplifier is connected to the input of the second stage (T4) of the second differential amplifier and to a first reference voltage source (Ur1), in that the inputs of the second stage (T2) of the first differential amplifier and of the first stage (T3) of the second differential amplifier are connected to each other and to an input terminal (E), in that the first differential amplifier forms with the first stage (T5) of the third differential amplifier a first cascade circuit and the second differential amplifier forms with the second stage (T6) of the third differential amplifier a second cascade circuit, in that the input of the second stage of the third differential amplifier is connected to a second reference voltage source (Ur2), which is at negative potential with respect to the first reference voltage source, in that the input of the first stage of the third differential amplifier is connected via a delay element (τ) with a delay corresponding to half a bit period to the input (E) for the CMI-coded signals and in that the outputs (A1 . . . A4) of the individual stages of the first and of the second differential amplifier represent the outputs for binary part-signals, which produce the required binary RZ signal by combination of two part-signals in each case.

2. CMI decoder according to Claim 1, characterized in that the first stage of the first differential amplifier includes a first transistor (T1), the collector terminal of which is connected to a first output terminal (A1) and via a first resistor (R1) to reference potential, in that the second stage of the first differential amplifier includes a second transistor (T2), the collector terminal of which is connected to a terminal for a third output (A3) and via a third resistor (R3) to reference potential, in that the first stage of the second differential amplifier includes a third transistor (T3), the collector terminal of which is connected to a second output terminal (A2) and via a second resistor (R2) to reference potential, in that the second stage of the second differential amplifier includes a fourth transistor (T4), the collector terminal of which is connected to a fourth output terminal (A4) and via a fourth resistor (R4) to reference potential, in that the first stage of the third differential amplifier includes a fifth transistor (T5), the collector terminal of which is connected to the combined emitter terminals of the first and of the second transistor (T1, T2), in that the second stage of the third differential amplifier includes a sixth transistor (T6), the collector terminal of which is connected to the combined emitter terminals of the third and of the fourth transistor (T3, T4), in that the base terminals of the first and of the fourth transistor (T1, T4) are connected to each other and to the first reference voltage source (Ur1), in that the base terminals of the second and of the third transistor (T2, T3) are connected to the signal input (E) and in that the base terminal of the sixth transistor (T6) is connected to the second reference voltage source.

3. CMI decoder according to Claim 1 or 2, characterized in that with a connection of the delay element (τ) to the input (E) for the CMI-coded signals for generation of a binary signal, the third output (A3) and the fourth output (A4) are connected to each other and represent a common output and the first output (A1) is provided for the connection of a device for clock derivation (TA).

4. CMI decoder according to Claim 1 or 2, characterized in that, with a connection of the delay element (τ) to an input (E') for an inverse CMI-coded signal for the generation of a binary signal, the first and the second output (A1, A2) are connected to each other and represent the common output for the required binary RZ signal and in that the connection of an arrangement (TA) for clock derivation to the fourth output (A4) is provided.

5. CMI decoder according to Claim 3 or 4, characterized in that the arrangement (TA) for clock derivation includes a resonant circuit tuned to the clock frequency of the binary signals.

6. CMI decoder according to Claims 1 to 5, characterized in that the D input of a first and of a second D flip-flop (DF1, DF2) are connected, separately in each case, to the outputs for the binary signals, the clock inputs of which flip-flops are connected to each other and to the output of the arrangement (TA) for clock derivation, and in that the inverting outputs ($\overline{Q}$) of the two D flip-flops are connected to each other and to an output (BA) for binary signals regenerated in terms of time.

7. CMI decoder according to Claims 6, characterized in that two signal inputs of a code-rule infringement verifier (VM) are connected to the noninverting outputs (Q) of the two D flip-flops (DF1, DF2), the clock input of which verifier is connected to the output of the arrangement (TA) for clock derivation and the output (MA) of which verifier is connected to a monitoring device.

8. CMI decoder according to Claim 6, characterized in that, for the generation of CMI signals regenerated in terms of amplitude and in terms of time, a CMI encoder is connected to the output (BA) for the binary signals regenerated in terms of time.

**Revendications**

1. Décodeur CMI servant à convertir des signaux codés selon le code CMI en des signaux binaires et comportant des amplificateurs différentiels raccordés à son entrée, caractérisé par le fait qu'il est prévu des premier, second et troisième amplificateurs différentiels (T1, T2; T3, T4; T5, T6), que l'entrée du premier étage (T1) du premier amplificateur différentiel est reliée à l'entrée du second étage (T4) du second amplificateur différentiel et à une première source de tension de référence (Ur1), que les entrées du second étage (T2) du premier amplificateur différentiel et du premier étage (T3) du second amplificateur différentiel sont reliées entre elles et à une borne d'entrée (E), que le premier amplificateur différentiel forme avec le premier étage (T5) du troisième amplificateur différentiel un premier montage en cascade et que le second amplificateur différentiel forme avec le second étage (T6) du troisième amplificateur différentiel un second montage en cascade, qu'à l'entrée du second étage du troisième amplificateur différentiel est reliée une seconde source de tension de référence (Ur2), qui est située à un potentiel négatif par rapport à la première source de tension de référence, que l'entrée du premier étage du troisième amplificateur différentiel est raccordée par l'intermédiaire d'un premier circuit à retard (τ) réalisant un retard correspondant à la moitié de la durée d'un bit, à l'entrée (E) pour les signaux codés selon le code CMI, et que les sorties (A1 . . . A4) des différents étages des premier et second amplificateurs différentiels représentent les sorties pour des signaux partiels binaires, qui forment, par réunion de deux signaux partiels respectifs, le signal RZ binaire désiré.

2. Décodeur CMI suivant la revendication 1, caractérisé par le fait que le premier étage du premier amplificateur différentiel contient un premier transistor (T1), dont la borne de collecteur est reliée à une première borne de sortie (A1) et, par l'intermédiaire d'une première résistance (R1), au potentiel de référence, que le second étage du premier amplificateur différentiel comporte un second transistor (T2), dont la borne de collecteur est reliée à une borne pour une troisième sortie (A3) et, par l'intermédiaire d'une troisième résistance (R3), au potentiel de référence, que le premier étage du second amplificateur différentiel comporte un troisième transistor (T3), dont la borne de collecteur est raccordée à une seconde borne de sortie (A2) et, par l'intermédiaire d'une seconde résistance (R2), au potentiel de référence, que le second étage du second amplificateur différentiel comporte un quatrième transistor (T4), dont la borne de collecteur est reliée à une quatrième borne de sortie (A4) et, par l'intermédiaire d'une quatrième résistance (R4), au potentiel de référence, que le premier étage du troisième amplificateur différentiel comporte un cinquième transistor (T5), dont la borne de collecteur est reliée aux bornes d'émetteur réunies des premier et second transistors (T1, T2), que le second étage du troisième amplificateur différentiel comporte un sixième transistor (T6), dont la borne de collecteur est reliée aux bornes d'émetteur, réunies, des troisième et quatrième transistors (T3, T4), que les bornes de base des premier et quatrième transistors (T1, T4) sont reliées entre elles et à la première source de tension de référence (Ur1), que les bornes de base des second et troisième transistors (T2, T3) sont reliées à l'entrée des signaux (E) et que la borne de base du sixième transistor (T6) est reliée à la seconde source de tension de référence.

3. Décodeur CMI selon la revendication 1 ou 2, caractérisé en ce que, dans le cas d'un raccordement du circuit à retard (τ) à l'entrée (E) pour les signaux codés selon le code CMI en vue de la production d'un signal binaire, la troisième sortie (A3) et la quatrième sortie (A4) sont reliées entre elles et représentent une sortie commune et que la première sortie (A1) est prévue pour le raccordement d'un dispositif (TA) servant à dériver la cadence.

4. Décodeur CMI suivant la revendication 1 ou 2, caractérisé par le fait que dans le cas d'un raccordement du circuit à retard (τ) à une entrée (E') pour un signal codé selon le code CMI, inverse, pour l'obtention d'un signal binaire, les première et seconde sorties (A1, A2) sont reliées entre elles et représentent la sortie commune pour le signal binaire RZ désiré et que le raccordement d'un dispositif (TA) servant à dériver la cadence est prévu sur la quatrième sortie (A4).

5. Décodeur CMI selon la revendication 4 ou 4, caractérisé par le fait que le dispositif (TA) servant à dériver la cadence comporte un circuit oscillant réglé sur la fréquence de cadence des signaux binaires.

6. Décodeur CMI suivant les revendications 1 à 5, caractérisé par le fait qu'aux sorties pour les signaux binaires sont reliées, respectivement séparément, les entrées D de première et seconde bascules bistables de type D (DF1, DF2), dont les entrées de cadence sont reliées entre elles et à la sortie du dispositif (TA) servant à dériver la cadence, et que les sorties inverseuses ($\overline{Q}$) des deux bascules bistables de type D sont reliées entre elles et à une sortie (BA) pour les signaux binaires régénérés d'une manière correcte dans le temps.

7. Décodeur CMI suivant la revendication 6, caractérisé par le fait qu'aux sorties non inverseuses (Q) des deux bascules bistables de type D (DF1, DF2) sont reliées deux entrées des signaux d'un contrôleur (VM) de violation de la règle du code, dont l'entrée de cadence est reliée à la sortie du dispositif (TA) servant à dériver la cadence et dont la sortie (MA) est reliée à un dispositif de contrôle.

8. Décodeur CMI suivant la revendication 6, caractérisé par le fait que pour l'obtention de signaux CMI régénérés du point de vue de l'amplitude et du temps, un codeur CMI est raccordé à la sortie (BA) prévue pour les signaux binaires régénérés d'une manière correcte en fonction du temps.

FIG 1

FIG 2

## FIG 3

# FIG 4

FIG 5